# EUROPEAN PATENT SPECIFICATION

(11) **EP 3 262 371 B1**
(45) Date of publication and mention of the grant of the patent: **29.04.2020**
(21) Application number: 16754666.2
(22) Date of filing: 05.02.2016
(51) Int. Cl.: F41J 1/10, F41J 11/00, F41G 3/26, G09B 9/00

(54) **A METHOD OF PROVIDING A LIVE FIRE TRAINING ENVIRONMENT AND A MOVEABLE TARGET FOR USE WITH SUCH A METHOD**
VERFAHREN ZUR BEREITSTELLUNG EINER SCHIESSÜBUNGSUMGEBUNG UND DARIN VERWENDETES BEWEGLICHES ZIEL
PROCÉDÉ D'OBTENTION D'UN ENVIRONNEMENT D'APPRENTISSAGE DE TIR RÉEL ET CIBLE MOBILE À UTILISER AVEC LEDIT PROCÉDÉ

(30) Priority: 23.02.2015 AU 2015900616
(43) Date of publication of application: 03.01.2018
(73) Proprietor: Marathon Robotics Pty Ltd, Hornsby, New South Wales 2077 (AU)
(72) Inventor: BROOKS, Alex, Hornsby, New South Wales 2077 (AU); KAUPP, Tobias, Hornsby, New South Wales 2077 (AU); MAKARENKO, Alexei, Hornsby, New South Wales 2077 (AU)
(74) Representative: Hamilton, Alistair
(86) International application number: PCT/AU2016/050066
(87) International publication number: WO 2016/134413

(56) References cited:
- WO-A1-2010/126779
- WO-A1-2011/035363
- WO-A1-2011/035363
- WO-A1-2013/123547
- WO-A1-2013/123547
- US-A1- 2011 089 639
- US-A1- 2012 208 150
- US-A1- 2013 341 869
- US-A1- 2013 341 869
- US-B1- 8 712 602

## Description

### Technical Field

The present invention relates to systems and methods for use in live fire training environments.

### Background to the Invention

It is usual practice in military organisations to use a firing range to train soldiers to hit moving targets. This is typically accomplished by installing targets on the range which move from side to side on fixed rails protected by reinforced banks of earth known as berms. The soldiers stand, kneel or lie in a line at one end of the range and shoot at the moving targets as they move left to right (and right to left). A number of targets are usually installed at various distances from the firing position of the soldiers.

However, such target arrangements are time consuming and costly to install due to the need to build the earth berms and lay rails. Also, once installed they are time consuming and costly to reconfigure. If damage occurs to one target then the entire range must be cleared to allow maintenance work to be carried out on the damaged target.

US2013/0341869 discloses a method of providing a live fire training environment including: providing a number of moveable targets being capable of movement in two opposite major directions across a ground surface, introducing the targets into a live fire training area, the live fire training area having at least one firing position instructing the targets to commence repeated side-to-side movements.

### Summary of the Invention

The present invention provides a method of providing a live fire training environment as set forth in claim 1.

Optionally, the targets are instructed to move to pre-determined distances from the firing position before commencing their side to side movements.

Optionally, the targets are deployed from a vehicle.

Optionally, the targets are deployed from the vehicle when the vehicle is in the region of the firing position.

Optionally, the moveable target further includes a collision avoidance system to detect the presence of obstacles when moving in either of the two major directions of travel.

Optionally, the moveable target includes a generally human shaped region.

Optionally, the human shaped region is ambiguously shaped to appear to face in the direction of travel of the target in both of the two major directions of travel.

Optionally, the human shaped region is mounted on a turntable to orient the human shaped region to face in either direction of travel.

### Brief Description of the Drawings

An embodiment of the present invention will now be described, by way of example only, with reference to the accompanying drawings, in which:
Figure 1 is a schematic top view of a moveable target according;
Figure 2 is a side elevation view of the target of figure 1;
Figure 3 is a front elevation view of the target of figure 1;
Figure 4 is a schematic overhead view of a firing range; and
Figure 5 illustrates the types of movements supported by the target of figure 1.

### Detailed Description of the Preferred Embodiment

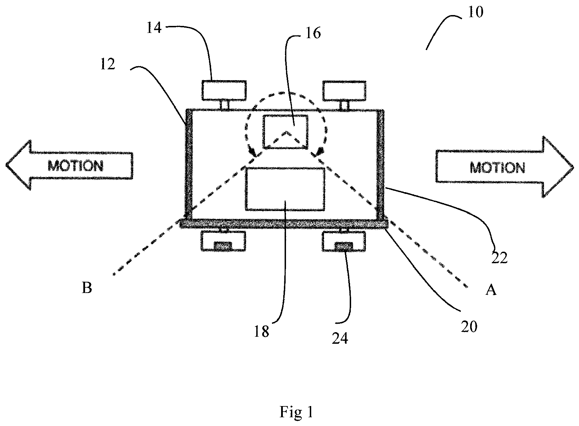

Referring to figures 1 to 3, a moveable target 10 is shown. The target 10 is a modified version of the robotic targets described in applicant's international patent application published as WO2011/035363.

Target 10 includes movement means for enabling the target to move across a ground surface in the form of wheels 14 attached to chassis 12. An upstanding human shaped dummy 18 is carried by chassis 12. Target is capable of movement in two opposite major directions to the left and right in the figure indicated by arrows "MOTION".

Target 10 includes a GPS based positioning system to enable accurate positioning of the target in a training area.

A collision avoidance system includes laser rangefinder 16 which is arranged to scan for obstacles ahead of the two major directions of movement.

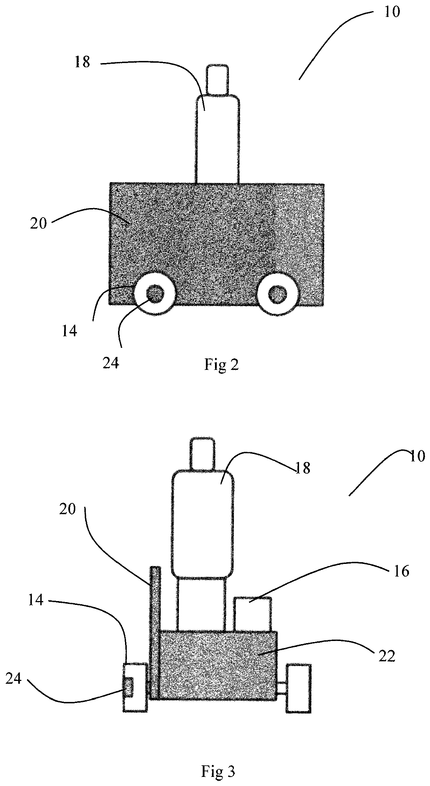

Target 10 includes a system of steel plate armour including main plate 20, minor plates 22 and hub protectors 24. The armour protects the vulnerable parts of the target, and particularly the electrical systems of the target, from damage due to bullet strikes. As best seen in figure 3, the minor plates do not extend upwards as far as the main plate 20. This allows the laser rangefinder 16 to "see" in the two directions of travel to the extent of broken lines A and B as shown in figure 1.

The armour is concentrated at one side of the target, being the side of the target which is predominantly exposed to bullet strikes from live ammunition fire when in use. There are weight constraints as to how much armour the chassis can carry. Concentrating the armour to the areas which are exposed to fire allows the maximum weight of armour to be provided where it is most needed.

As best seen comparing figures 2 and 3, the human shaped dummy 18 has a discernible head and shoulders. The shoulders are wider when viewed front-on as in figure 3, giving the dummy the appearance of facing in the direction of travel of the target 10. Furthermore, because the head of the human shaped dummy is of somewhat ambiguous appearance, it will appear to the human eye, particularly when viewed from a distance, to be facing in the direction of travel regardless of which of the two major directions the target is currently moving in. This is largely due to the fact that an onlooker will perceive the human shape to be moving forwards, rather than backwards, which is an unnatural movement.

When the target 10 is configured to move across a firing range and back again it will always appear that the dummy is facing forwards. This effect is enhanced if obstacles or other visual screens are provided at the points where the target changes direction. This tricks a human onlooker to perceive that the dummy or the target has turned around whilst it was out of view behind the screen.

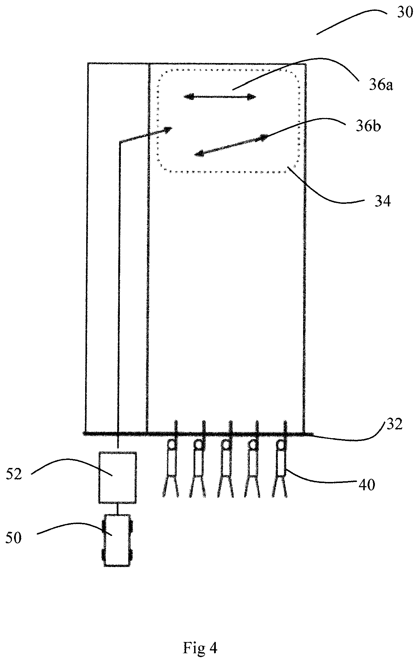

Referring to figure 4, a live fire training area in the form of firing range 30 is shown. The firing range 30 has a firing line 32 from which participants 40 shoot at targets 10 in a down range region 34 of the range.

Targets 10 are introduced into the range by being deployed from a vehicle in the form of trailer 52 towed by a vehicle 50. The targets 10 are commanded by way of a command base station device such as a laptop computer or other computing device to move down a ramp of the trailer and to travel down range to take up positions at various pre-determined distances from the firing line 32. The targets are instructed to commence repeated movements from side to side from the point of view of the participants 40.

In figure 4, two targets have been deployed. One adopts a pattern of movement 36a; the other adopts a pattern of movement 36b. The participants are instructed by a training or testing office to take aim and fire at particular targets. A hit detection system built into each target records bullet strikes to allow the shooting accuracy of each participant to be measured.

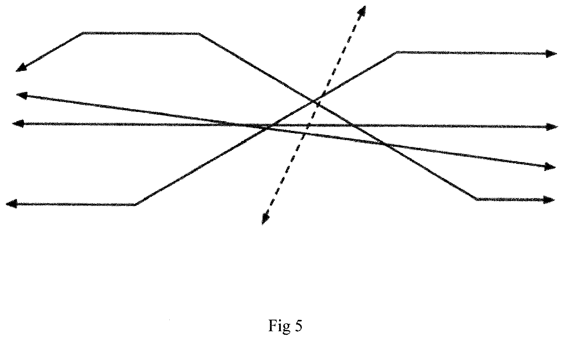

Targets 10 may be instructed to move in a side to side fashion to simulate the appearance of a traditional type of target moving on fixed rails, or may adopt other more varied side to side movements. Referring to figure 5, examples of possible patterns of movement of target 10 are shown. The paths shown in solid lines are supported; the path shown in broken line is not because the electronics would not be hidden from incoming bullets behind the main plate 20.

In the embodiment described above the human shaped dummy appeared to be facing forwards regardless of the direction of travel due to the head of the dummy having a somewhat ambiguous appearance. In other embodiments the dummy may be mounted on a rotating mechanism such as a turntable which allows the dummy to be rotated to face in the direction of travel.

In the embodiment described above the target had the appearance of a human shaped dummy. In other embodiments the target may have other appearances such as resembling a vehicle or an animal.

In the embodiment described above the targets were deployed from a vehicle in the form of a trailer. In other embodiments other types of vehicles may be used such as a van or a truck.

It can be seen that embodiments of the invention have at least one of the following advantages:
- the safety and repeatability of a rail based system, but with the advantages of robotics
- Reduced upfront time/costs (no earthmoving etc) and reduced maintenance costs (lack of fixed infrastructure such as rails and downrange power out in the weather).
- Increased flexibility: the "virtual rails" can be moved around in software without expensive and time consuming redeployment of physical berms/rails.
- Decreased equipment ownership by providing "on demand" targetry: (a) a small stable of robots can be used to serve a large number of training ranges within a facility, being deployed by trailer as and where required, and (b) within a single range, a small number of robots can provide targetry at multiple distances by moving to different areas of the range on demand.
- Decreased setup time due to the ability to "self deploy" from a trailer.
- Decreased downtime, resulting in increased training throughput, due to the fact that an unserviceable target can simply be substituted out (even during training) rather than forcing shooters to make do with the fraction of the rail based targets which are still operable.

Any reference to prior art contained herein is not to be taken as an admission that the information is common general knowledge, unless otherwise indicated.

## Claims

1. A method of providing a live fire training environment including the steps of:
providing a number of moveable targets (10), the targets including:
movement means enabling the target to move across a ground surface in two opposite major directions of travel; and
a positioning system to enable the target to be positioned in a live fire training area,
armour (20) to protect at least one electronic system of the target from damage due to bullet strikes,
wherein the armour is concentrated at one side of the target, said method comprising the steps of:
introducing the targets into a live fire training area, the live fire training area having at least one firing position where participants take up position to fire at the targets; and
instructing the targets to commence repeated movements in a generally side to side fashion with respect to the at least one firing position.

2. A method according to claim 1 wherein the targets (10) are instructed to move to pre-determined distances from the firing position before commencing their side to side movements.

3. A method according to any preceding claim wherein the targets (10) are deployed from a vehicle (50, 52).

4. A method according to claim 3 wherein the targets (10) are deployed from the vehicle when the vehicle (50, 52) is in the region of the firing position.

5. A method according to any preceding claim, the targets further including a collision avoidance system (16) to detect the presence of obstacles when moving in either of the two major directions of travel.

6. A method according to any preceding claim wherein the targets (10) include a generally human shaped region (18).

7. A method according to claim 6 wherein the human shaped region (18) is ambiguously shaped to appear to face in the direction of travel of the target in both of the two major directions of travel.

8. A method according to claim 7 wherein the human shaped region (18) is mounted on a turntable to orient the human shaped region to face in either direction of travel.

## Patentansprüche

1. Verfahren zum Bereitstellen einer Trainingsumgebung mit scharfer Munition, das die folgenden Schritte umfasst:
Bereitstellen einer Anzahl von beweglichen Zielen (10), wobei die Ziele Folgendes umfassen:
Bewegungsmittel, die ermöglichen, dass sich das Ziel über eine Bodenfläche in zwei entgegengesetzten Hauptfahrtrichtungen bewegt, und
ein Positionsbestimmungssystem, um zu ermöglichen, dass das Ziel in einem Trainingsbereich mit scharfer Munition positioniert wird,
Panzerung (20) zum Schützen von mindestens einem elektronischen System des Ziels vor Beschädigung aufgrund von Geschosseinschlägen,
wobei die Panzerung auf einer Seite des Ziels konzentriert ist, wobei das Verfahren die folgenden Schritte umfasst:
Einbringen der Ziele in einen Trainingsbereich mit scharfer Munition, wobei der Trainingsbereich mit scharfer Munition mindestens eine Abschussposition aufweist, in der Teilnehmer eine Position einnehmen, um auf die Ziele zu schießen, und
Anweisen der Ziele, wiederholte Bewegungen auf eine Weise, die im Allgemeinen von einer Seite zur anderen Seite in Bezug auf die mindestens eine Abschussposition führt, aufzunehmen.

2. Verfahren nach Anspruch 1, wobei die Ziele (10) angewiesen sind, sich zu vorbestimmten Abständen von der Abschussposition zu bewegen, bevor sie ihre Bewegungen von einer Seite zur anderen Seite aufnehmen.

3. Verfahren nach einem der vorhergehenden Ansprüche, wobei die Ziele (10) von einem Fahrzeug (50, 52) eingesetzt werden.

4. Verfahren nach Anspruch 3, wobei die Ziele (10) von dem Fahrzeug eingesetzt werden, wenn das Fahrzeug (50, 52) in dem Gebiet der Abschussposition ist.

5. Verfahren nach einem der vorhergehenden Ansprüche, wobei die Ziele ferner ein Kollisionsvermeidungssystem (16) umfassen, das die Anwesenheit von Hindernissen detektiert, wenn sie sich in den beiden Hauptfahrtrichtungen bewegen.

6. Verfahren nach einem der vorhergehenden Ansprüche, wobei die Ziele (10) ein im Allgemeinen menschlich geformtes Gebiet (18) umfassen.

7. Verfahren nach Anspruch 6, wobei das menschlich geformte Gebiet (18) mehrdeutig geformt ist, um in die Fahrtrichtung des Ziels in beide der zwei Hauptfahrtrichtungen gewandt zu erscheinen.

8. Verfahren nach Anspruch 7, wobei das menschlich geformte Gebiet (18) auf einem Drehtisch befestigt ist, um das menschlich geformte Gebiet auszurichten, in eine von beiden Fahrtrichtungen gewandt zu sein.

## Revendications

1. Procédé de production d'un environnement d'entraînement au tir réel, le procédé comprenant les étapes consistant à :
fournir un certain nombre de cibles mobiles (10), les cibles comprenant :
des moyens de mouvement permettant à la cible de se déplacer sur une surface au sol dans deux sens de déplacement principaux opposés ; et
un système de positionnement permettant de positionner la cible dans une zone d'entraînement au tir réel,
un blindage (20) destiné à protéger au moins un système électronique de la cible contre les dommages dus aux impacts de balles,
le blindage étant concentré sur un côté de la cible, ledit procédé comprenant les étapes consistant à :
introduire les cibles dans une zone d'entraînement au tir réel, la zone d'entraînement au tir réel ayant au moins une position de tir à laquelle les participants prennent position pour tirer sur les cibles ; et
commander les cibles de manière à ce qu'elles commencent à effectuer des mouvements répétés généralement côte à côte par rapport à l'au moins une position de tir.

2. Procédé selon la revendication 1, les cibles (10) étant commandées pour qu'elles se déplacent à des distances prédéterminées de la position de tir avant de commencer leurs mouvements latéraux.

3. Procédé selon l'une quelconque des revendications précédentes, les cibles (10) étant déployées à partir d'un véhicule (50, 52).

4. Procédé selon la revendication 3, les cibles (10) étant déployées à partir du véhicule lorsque le véhicule (50, 52) est dans la zone de la position de tir.

5. Procédé selon l'une quelconque des revendications précédentes, les cibles comprenant en outre un système anticollision (16) destiné à détecter la présence d'obstacles lors du déplacement dans l'un ou l'autre des deux sens de déplacement principaux.

6. Procédé selon l'une quelconque des revendications précédentes, les cibles (10) comprenant une zone (18) de forme généralement humaine.

7. Procédé selon la revendication 6, la zone (18) de forme humaine ayant une forme ambiguë de manière à sembler être dirigée dans le sens de déplacement de la cible dans les deux sens de déplacement principaux.

8. Procédé selon la revendication 7, la zone (18) de forme humaine étant montée sur un plateau tournant destiné à orienter la zone de forme humaine pour être dirigée dans l'un ou l'autre sens de déplacement.
